# EUROPEAN PATENT APPLICATION

(11) **EP 4 711 944 A1**
(43) Date of publication of application: **18.03.2026**
(21) Application number: 25162819.4
(22) Date of filing: 11.03.2025
(51) Int. Cl.: G06F 16/2455, G06F 13/16, G06F 16/245, G06F 16/901, G06F 13/38, G06F 15/78

(54) **COMPUTATION MANAGEMENT METHOD FOR DATABASE, APPARATUS, STORAGE MEDIUM AND SYSTEM**

(30) Priority: 13.09.2024 CN 202411287884
(71) Applicant: Samsung Electronics Co., Ltd., Suwon-si, Gyeonggi-do 16677 (KR)
(72) Inventor: TAN, Ran, Shaanxi Province (CN); HE, Xing, Shaanxi Province (CN); KIM, Bumjun, Suwon-si, Gyeonggi-do 16677 (KR); KIM, Jungsoo, Suwon-si, Gyeonggi-do 16677 (KR); LI, Ning, Shaanxi Province (CN); ZHANG, Nannan, Shaanxi Province (CN)
(74) Representative: Kuhnen & Wacker Patent- und Rechtsanwaltsbüro PartG mbB

(57) **Abstract**

A computation management method for managing a database, including: transmitting, by a compute proxy (812), a computation request to a processing near memory, PNM, device (820) based on determining that a computation to be performed includes a predetermined access-intensive computation in which a data transmission frequency between a processor (810) and a memory (825) is greater than a first predetermined threshold, and the compute proxy (812) is selected to perform the access-intensive computation; and receiving, by the compute proxy (812), a notification about a computation result generated by the PNM device (820) based on the computation request.

## Description

### TECHNICAL FIELD

The present disclosure relates to database and computing near-memory devices, and more specifically to a computation management method for a database, an apparatus, a storage medium and a system.

### BACKGROUND ART

Redis may be a memory database having relatively high efficiency as a caching database for a disk database. However, there are still several time-consuming computation scenarios in Redis during the processing datasets of various object types. In order to ensure performance, Redis has been designed by software to limit or circumvent time-consuming computations that are too long. For example, because rehash is time-consuming, Redis may use progressive rehash, which may be referred to as time-sharing, so that a central processing unit (CPU) may be not blocked for too long. As another example, in listpack traversal, Redis may limit a length of a listpack in terms of software, and when the length exceeds a threshold, it may be converted to another non-compact data structure for storage. As yet another example, because a compression and decompression process for quicklist may be time-consuming, Redis supports a function for disabling through configuration.

The idea behind these approaches is to use circumvention schemes, they do not fundamentally improve the efficiency of these access-intensive computations, and come at the cost of additional restrictions or functionality loss.

### SUMMARY

Provided is a computation management method for a database, an apparatus, a storage medium and a system, to at least solve the above technical problem and other technical problem not mentioned above.

Additional aspects will be set forth in part in the description which follows and, in part, will be apparent from the description, or may be learned by practice of the presented embodiments.

In accordance with an aspect of the disclosure, In accordance with an aspect of the disclosure, a computation management method for managing a database includes: transmitting, by a compute proxy, a computation request to a processing near memory (PNM) device based on determining that a computation to be performed includes a predetermined access-intensive computation in which a data transmission frequency between a processor and a memory is greater than a first predetermined threshold, and the compute proxy is selected to perform the access-intensive computation; and receiving, by the compute proxy, a notification about a computation result generated by the PNM device based on the computation request.

In accordance with an aspect of the disclosure, a computation management apparatus for a database includes: a request transmitting unit configured to transmit, by a compute proxy, a computation request to a processing near memory (PNM) device based on determining that a computation to be performed includes a predetermined access-intensive computation in which a data transmission frequency between a processor and a memory is greater than a first predetermined threshold, and the compute proxy is selected to perform the access-intensive computation; and a notification receiving unit configured to receive, by the compute proxy, a notification about a computation result generated by the PNM device in based on the computation request.

In accordance with an aspect of the disclosure, a computer readable storage medium is configured to store instructions when executed by at least one processor included in a computing device, causes the computing device to: transmit, by a compute proxy, a computation request to a processing near memory (PNM) device based on determining that a computation to be performed includes a predetermined access-intensive computation in which a data transmission frequency between a processor and the memory is greater than a first predetermined threshold, and the compute proxy is selected to perform the access-intensive computation; and receive, by the compute proxy, a notification about a computation result generated by the PNM device based on the computation request.

In accordance with an aspect of the disclosure, a system includes: a computing apparatus; and at least one storage apparatus configured to store instructions which, when executed by at least one processor included in the computing apparatus, causes the computing apparatus to: transmit, by a compute proxy, a computation request to a processing near memory (PNM) device based on determining that a computation to be performed includes a predetermined access-intensive computation in which a data transmission frequency between a processor and the memory is greater than a first predetermined threshold, and the compute proxy is selected to perform the access-intensive computation; and receive, by the compute proxy, a notification about a computation result generated by the PNM device based on the computation request.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a schematic diagram of an operation process of progressive rehashing according to an embodiment;
FIG. 2 illustrates a schematic diagram of data structure conversion of a compact list according to an embodiment;
FIG. 3 illustrates a schematic diagram of configuring compression enable/disable for a quicklist according to an embodiment;
FIG. 4 illustrates a schematic diagram of data transmission for a rehashing process according to an embodiment;
FIG. 5 illustrates a schematic diagram of data transmission for a process of traversing a compact list according to an embodiment;
FIG. 6 illustrates a schematic diagram of data transmission for a process of compressing/decompressing a quicklist according to an embodiment;
FIG. 7 illustrates a flowchart of a computation management method for a database according to an embodiment;
FIG. 8 illustrates a schematic diagram of data interaction of a computation management method for a database according to an embodiment;
FIG. 9 illustrates an interaction schematic diagram of a rehash core according to an embodiment;
FIG. 10 illustrates an interaction schematic diagram of a traversal core according to an embodiment;
FIG. 11 illustrates an interaction schematic diagram of a compress/decompress core according to an embodiment;
FIG. 12 illustrates a timing diagram of a rehashing computation process according to an embodiment;
FIG. 13 illustrates a timing diagram of a computation process of traversing a compact list according to an embodiment;
FIG. 14 illustrates a timing diagram of a computation process of compressing/decompressing a quicklist according to an embodiment;
FIG. 15 illustrates a comparison diagram according to an embodiment;
FIG. 16 illustrates a block diagram of a computation management apparatus for a database according to an embodiment.

### DETAILED DESCRIPTION

In order to assist a person of ordinary skill in the art in understanding the present disclosure, embodiments of the present disclosure are described below, in conjunction with the accompanying drawings.

It is noted that terms "first", "second" and the like are used in the present disclosure for distinguishing similar objects, and not necessarily for describing a particular order or sequence. It should be understood that data so used may be interchanged, where appropriate, so that the embodiments of the present disclosure described herein may be implemented in an order other than those illustrated or described herein. The embodiments described below are not intended to represent all embodiments consistent with the present disclosure. Rather, the particularly described embodiments are only examples of apparatuses and methods consistent with some aspects of the present disclosure as detailed in the appended claims.

It is noted that a phrase such as "at least one of several items" as used in the present disclosure is intended to encompass three parallel cases of "any one of the several items", "a combination of any number of the several items ", and "all of the several items". For example, "including at least one of A and B" may indicate the following three parallel cases: (1) including A; (2) including B; and (3) including A and B. Another example is "performing at least one of step 1 and step 2", which may indicate the following three parallel cases: (1) performing step one; (2) performing step two; and (3) performing step one and step two.

A database such as Redis may be used as a caching database for a disk database. In terms of physical resources, Redis may save memory by using a memory-saving data structure to store data; in terms of efficiency, a single-thread characteristic of Redis may cause Redis to be run as efficiently as possible and avoid blocking. There are still several time-consuming computation scenarios during processing datasets of various object types in Redis. In order to ensure consistent performance, Redis has been designed by software to limit or circumvent time-consuming computations that are too long.

For example, a dictionary (which may be referred to as a "DICT") may be an example of a data structure in Redis, which may be used to store hashes, sets, ordered sets of Redis objects, and also the database dictionaries maintained by Redis itself.

A rehash operation may refer to an operation for dynamically expanding and reducing a size of a dictionary. With a number of elements constantly changing, Redis may maintain a load factor to be within a reasonable range using a rehash operation, dynamically adjust a size of a bucket (which may be referred to as a "bucket size"), may recalculate a key value (e.g., a hash key value) for each entry according to a new bucket size and complete hooking, in order to obtain the balance of memory and efficiency.

Because a rehash operation may be time-consuming, Redis may use progressive rehash. For example, a rehashing operation may be completed using time-sharing so that a central processing unit (CPU) may be not blocked for too long. When there is a need for rehashing, a server may not rehash all key-value pairs in a hash table (ht), e.g., ht[0] to ht[1], one time, and instead may perform a rehashing operation multiple times progressively. For example, each time an add, delete, lookup, or update operation is performed on the dictionary, it may rehash all entries in a bucket.

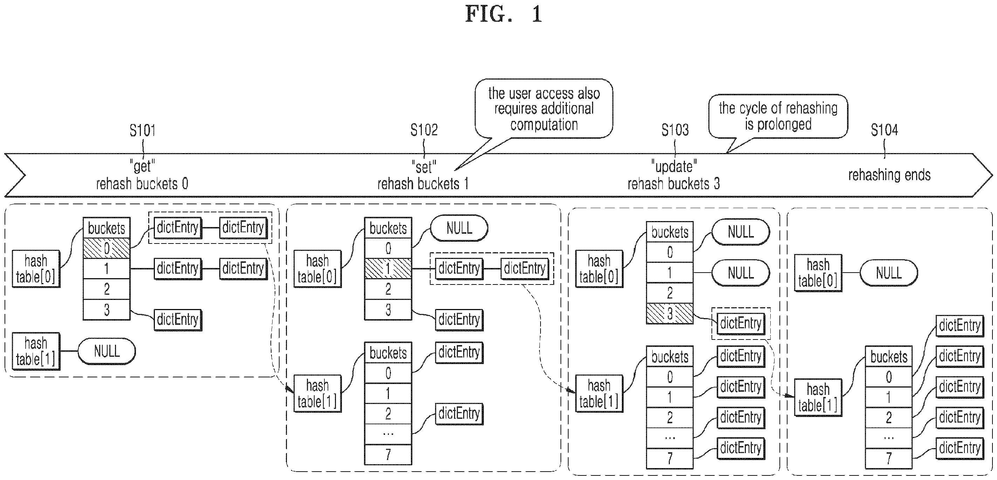

FIG. 1 illustrates a schematic diagram of an operation process of progressive rehashing according to an embodiment.

Referring to FIG. 1, when a target is to expand a size of a bucket from 4 to 8, bucket[0] and bucket[2] may be rehashed. An example of a rehashing process 100 is described below.

At operation S101, when a "get" operation for a user occurs, all entries in bucket[0] may be rehashed.

At operation S102, when a "set" operation for a user occurs, all entries in bucket[1] may be rehashed.

At operation S103, when an "update" operation for a user occurs, all entries in bucket[3] may be rehashed.

At operation S104, the rehashing process may end.

In the above process 100, the rehash cycle may be extended, and user access requires additional resources for computation.

For another example, a listpack (which may be referred to as a "compact list") may be a data structure used to save memory by compactly arranging data in the memory. For example, a listpack may be used for data storage for data types such as an OBJ_HASH type, an OBJ_ZSET type, and an OBJ_LIST type.

When searching, inserting, deleting and performing other basic operations on data in the listpack, an entire data region in the listpack may be traversed, and a related computation operation may be performed. Because the listpack may be compactly stored in the memory, frequent traversal of the listpack may result in high memory consumption. In Redis, in order to reduce the computation consumption for traversing the listpack, a solution in software may be to limit a length of the listpack. For example, when the length of the listpack exceeds a threshold, the listpack may be converted to another non-compact data structure for storage. Examples of conversions between data structures according to embodiments may be shown in Table 1 below:

**TABLE 1**

| OBJ type | Stored data structure | |
|---|---|---|
| | a length of listpack < the threshold | the length of listpack >= the threshold |
| OBJ_HASH | listpack | Dict |
| OBJ_ZSET | listpack | Skip list |
| OBJ_LIST | listpack | Quicklist |

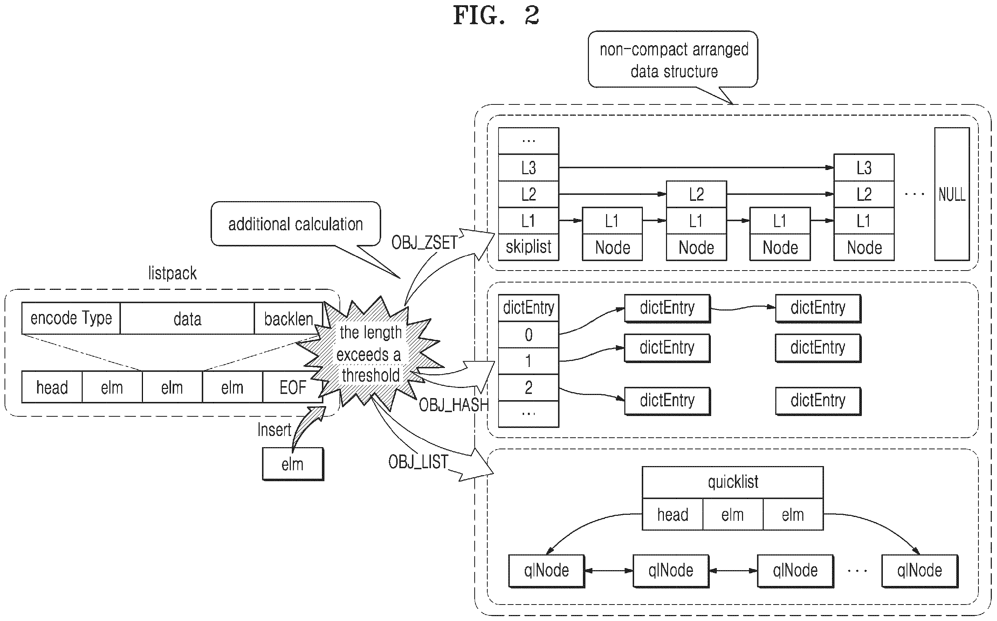

FIG. 2 illustrates a schematic diagram of data structure conversion of a compact list according to an embodiment.

Referring to FIG. 2, elm may refer to an entry in the listpack; encodeType may refer to an encoding type; backlen may refer to an offset of a length of a backtrack start address of a current entry (e.g., an entry length during reverse traversal); and EOF may refer to an end identifier of the listpack.

If a new entry is to be inserted into the listpack, when the entry length in the listpack is greater than a threshold, additional computation may be used to convert the listpack to a non-compact data structure.

For example, in a storage scenario in which an encoding type is OBJ_ZSET, the listpack may be converted to a skip list, and Node may refer to a basic data unit of the skip list. As another example, in a storage scenario in which the encoding type is OBJ _HASH, the listpack may be converted to a dictionary, and dictEntry may refer to a basic data unit of the dictionary. As yet another example, in a storage scenario in which the encoding type is OBJ_LIST, the listpack may be converted to a quicklist, and qlNode may refer to a basic data unit of the quicklist, head may refer to a header of the quicklist, and tail may refer to tail of the table.

As another example, quicklist may be an underlying data structure of OBJ_LIST type. Redis may support a compression algorithm such as LZF compression for the quicklist in order to save space. For example, LZF compression and storage may be performed on all intermediate nodes except two nodes (e.g., a head node and a tail node). When accessing the intermediate nodes, decompressing may be performed first; when saving the intermediate nodes, compressing may be performed first.

Because the compressing and decompressing processes may be time-consuming, Redis may support disabling this function by configuring a switch for enabling and disabling compression.

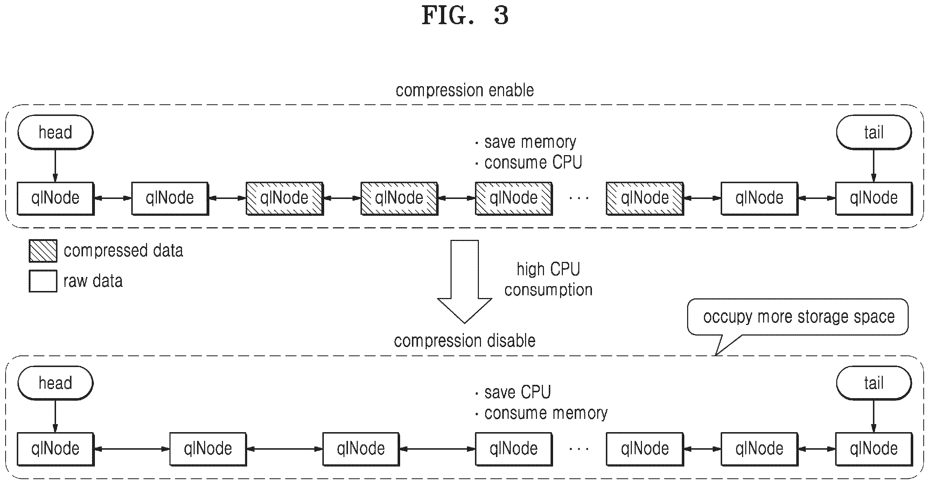

FIG. 3 illustrates a schematic diagram of configuring compression enable/disable for a quicklist according to an embodiment.

Referring to FIG. 3, when compression is enabled, compression of nodes in the quicklist may save memory, but may also cause high CPU consumption during accessing and saving the quicklist. However, when compression is disabled, the nodes in the quicklist may exist as raw data, which may reduce CPU consumption, but may also occupy more memory, resulting in a waste of storage space.

Accordingly, some approaches for performing computation with high CPU consumption may use the circumvention schemes discussed above, which may not fundamentally improve the efficiency of these access-intensive computations, and may come at the cost of additional restrictions or functionality loss, and the circumvention of which may lead to other side effects, which do not truly improve the performance of Redis. For example, the problems associated with the above circumvention schemes discussed above for various time-consuming computations (e.g., access-intensive computations) may be shown in Table 2 below.

**TABLE 2**

| Time-consuming computation | Circumvention Scheme | Problem |
|---|---|---|
| Rehash | Progressive rehash | The stress of rehashing may be assigned to each user access; |
| | | The cycle of rehashing may be prolonged; |
| | | A response delay may be increased |
| Listpack traversal | Listpack length limit | Data structure conversion may add additional computation; The memory compression advantage of listpack may be lost |
| Quicklist Compression/Decompression | Enable/Disable switch | The memory saving advantage of compression may be lost |

In order to fundamentally improve the efficiency of Redis, the computation modes of the above time-consuming computations may be sequentially analyzed as follows:

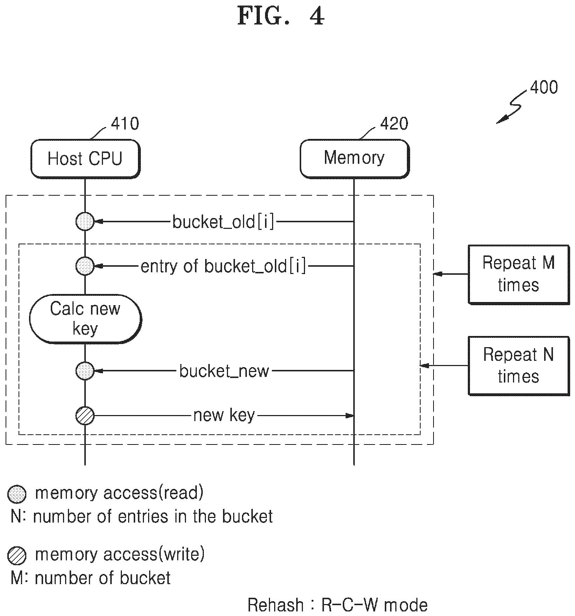

FIG. 4 illustrates a schematic diagram of inter-device data transmission for a rehashing process according to an embodiment.

Referring to FIG. 4, for a rehashing process 400, all entries in a hash table (which may be referred to as a "hashtable") may be traversed, and if there are M buckets in the hashtable, and N entries in each bucket (where M and N are integers greater than zero), then between a host CPU 401 and a memory 402, the host CPU 401 may perform M×N accesses to the memory 402 to read entries. For example, after reading each entry, the host CPU may perform hash computation to obtain a new hash key value, and may write the obtained new hash key value into the hash table in the memory through memory accesses again. The overall mode of this rehashing process 400 may be summarized as a Read-Calculate-Write (R-C-W) mode.

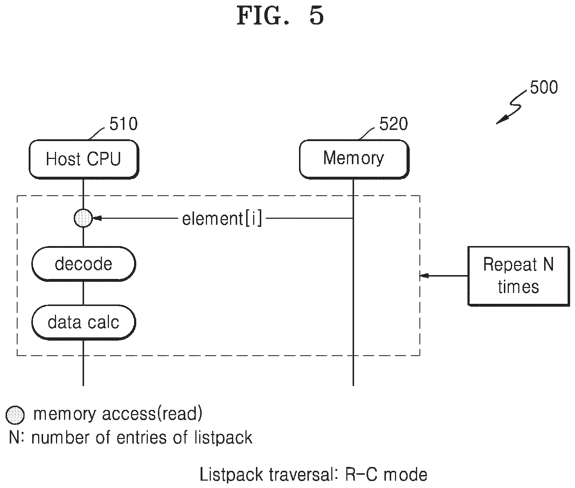

FIG. 5 illustrates a schematic diagram of inter-device data transmission for a process of traversing a compact list according to an embodiment.

Referring to FIG. 5, for a process 500 for traversing the compact list, each element in the listpack may be read from the memory by the host CPU 510 in sequence, and if there are N elements in the listpack, the host CPU 510may access the memory 520 and read N times . The overall mode of this process 500 of traversing the listpack may be summarized as a read-calculate (R-C) mode.

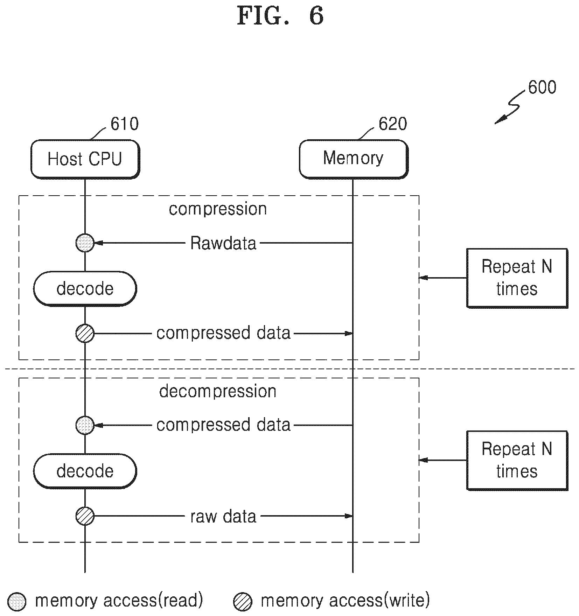

FIG. 6 illustrates a schematic diagram of data transmission for a process of compressing or decompressing a quicklist according to an embodiment.

Referring to FIG. 6, for a process 600 for compressing and/or decompressing the quicklist, it the host CPU 610 may sequentially fetch data from the memory 620 by accessing the memory 620, and to access the memory 620 in order to write the data back to the memory 620 after performing the compression/decompression computation process in the host CPU 610. If N quicklists are processed, the process 600 may be repeated N times. The overall mode of this process 600 of compressing and/or decompressing the quicklist may be summarized as a read-calculate-write (R-C-W) mode.

Through the above analysis, it may be seen that the above computation scenarios may all belong to access-intensive computations and may consume a large amount of time due to multiple accesses to the memory, and these computation scenarios may have several commonalities.

For example, regarding access modes, frequent data transmission may be performed in these computation scenarios, and two modes, e.g., the R-C mode and the R-C-W mode, may be repeated;

As another example, regarding computation characteristics, computation logic may be relatively simple in these computation modes, and repeated execution of the same computation process may be performed without complex logical control.

In order to solve the above problems, embodiments may provide a computation management method for a database, an apparatus, a storage medium, and a system, which may transfer time-consuming access-intensive computation from the database to a place near memory, for example, to a computation memory such as a processing near memory (PNM) device, which may significantly reduce the data transmission between the CPU and the memory in the database, and may release the CPU computation resources of the database, in order to fundamentally improve the efficiency of the database.

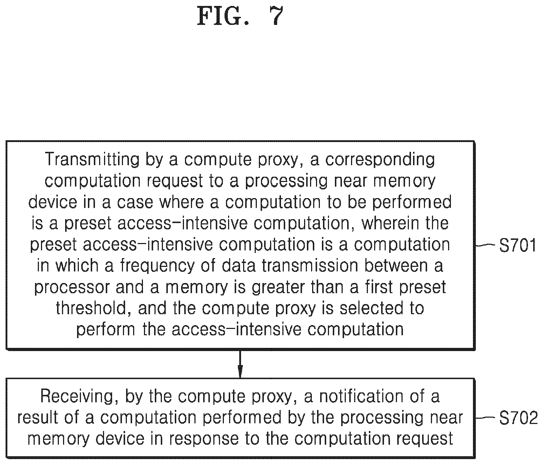

Below, examples of the computation management method for a database, an apparatus, a storage medium, and a system according to embodiments of the present disclosure are described with reference to FIGS. 7 through 16.

Referring to FIG. 7, at operation S701, a corresponding computation request may be transmitted by a compute proxy to a PNM device based on determining that a computation to be performed is a predetermined access-intensive computation. In embodiments, the access-intensive computation may be a computation in which a frequency of data transmission between a processor and a memory is greater than a first predetermined threshold, and the compute proxy may be selected to perform the access-intensive computation.

According to an exemplary embodiment of the present disclosure, a user may perform data processing operations such as searching, inserting, updating, and the like on a database such as Redis, and the database may, in a process of performing a current user operation, determine whether or not a computation to be performed at a current step belongs to a predetermined access-intensive computation. The access-intensive computation may be a computation in which the frequency of data transmission between the processor (e.g., a CPU) and the memory is greater than the first predetermined threshold value. For example, this may mean that the computation process of this computation type belongs to a type of computation in which the frequency of data transmission between the processor and the memory is high, such as a computation in which the R-C and R-C-W modes are repeated frequently to complete the data transmission. A corresponding computation request may be transmitted to a PNM device through a computation proxy configured to perform access-intensive computation based on determining that a computation to be performed is a predetermined access-intensive computation, to avoid performing the predetermined access-intensive computation directly in the database.

According to an exemplary embodiment of the present disclosure, for a non-access-intensive computation, for example a computation mode in which there is no frequent data transmission between the processor and the memory, and specifically, a non-access-intensive computation may be indicated by the frequency of the data transmission between the processor and the memory being less than or equal to the first predetermined threshold value, computation offloading may not be performed. For example, the computation process of the non-access-intensive computation may be not transferred from the database to the PNM device, and instead the corresponding computation process may be accomplished through data transmission between the host of the database and the memory.

According to an exemplary embodiment of the present disclosure, the access-intensive computation may further include at least one of: a computation in which a frequency of accessing the memory is greater than a second predetermined threshold; a computation in which a degree of simplicity of the computation is less than a third predetermined threshold; a computation in which a degree of simplicity of logical control of the computation is less than a fourth predetermined threshold.

For example, the computation in which the frequency of accessing the memory being greater than the second predetermined threshold may indicate that the type of the current computation belongs to a type of computation that requires frequent data accesses to the memory. As another example, the computation in which the degree of simplicity of the computation is less than the third predetermined threshold may indicate that the type of the current computation belongs to a type of computation that may be completed by performing a same computation process several times. As another example, the computation in which the degree of simplicity of logical control of the computation is less than the fourth predetermined threshold may indicate that the type of the current computation belongs to a type of computation that requires only simple logic control and does not require addition of complex algorithms. In addition, a type of computation with a small memory requirement in a final result of the computation may be included, which may indicate that the type of the current computation belongs to a type of computation for which a computation result does not require a large amount of data storage in the memory.

According to an exemplary embodiment of the present disclosure, the access-intensive computation may include at least one of: a rehashing operation or process; a traversing operation or process corresponding to a compact list; a compression operation or process corresponding to a quicklist, and a decompression operation or process corresponding to a quicklist.

For example, according to an exemplary embodiment of the present disclosure, at least one of the following items may be categorized as an access-intensive computation by analyzing the characteristics of the computation processes as described above: e.g., rehashing; traversing the compact list (which may be referred to as "listpack traversal"); compressing and/or decompressing the quicklist (which may be referred to as "quicklist compression/decompression").

According to an exemplary embodiment of the present disclosure, the compute proxy selected or determined in the database may include at least one of: a first compute proxy configured to perform the rehashing; a second compute proxy configured to perform the traversing of the compact list; and a third compute proxy configured to perform the compressing/decompressing of the quicklist.

According to an exemplary embodiment of the present disclosure, corresponding compute proxies may be configured to perform different access-intensive computations in the database. For example, the compute proxies may include at least one of: a first compute proxy configured to perform the rehashing, which may also be represented by a rehash proxy; a second compute proxy selected or determined for the traversing of the compact list, which may also be represented by a traversal proxy; and a third compute proxy configured to perform the compressing/decompressing of the quicklist, which may also be represented by a compression/decompression proxy.

At operation S702, a notification of a result of a computation performed by the PNM device in response to or based on the computation request may be received by the compute proxy.

According to an exemplary embodiment of the present disclosure, the method described above may further include: performing, by a compute core, a corresponding computation process in response to or based on the computation request, in the PNM device; wherein the compute core is configured to perform the access-intensive computation, which includes at least one of: a first compute core configured to perform the rehashing; a second compute core configured to perform the traversing of the compact list; and a third compute core configured to perform for the compressing/decompressing of the quicklist.

According to an exemplary embodiment of the present disclosure, the compute core may be selected or determined in the PNM device for the access-intensive computation, and a corresponding computation process may be performed by the compute core in response to or based on a computation request transmitted by the database; wherein, corresponding compute cores may be selected or determined in the PNM device for different access-intensive computations. For example, the compute cores may include at least one of: a first compute core configured to perform rehashing, which may be represented by a rehash core; a second compute core configured to perform traversing the compact list, which may be represented by a traversal core; and a third compute core configured to perform compressing/decompressing the quicklist, which may be represented by a compression/decompression core.

According to an exemplary embodiment of the present disclosure, the corresponding computation process may be performed in response to or based on the computation request by the compute core in the PNM device, which may specifically include: performing, by a process control unit and at least one computation unit in the compute core, the corresponding computation process in response to or based on the computation request; wherein the process control unit and the at least one computation unit in the compute core are selected or determined for the access-intensive computation. For example, the process control unit and the at least one computation unit in the compute core may include at least one of: a rehash control unit and a hash unit configured to perform the rehashing in the first compute core; a traversal control unit, a first decoding unit and a comparing unit configured to perform the traversing of the compact list in the second compute core; a compression/decompression control unit, a second decoding unit, an encoding unit and a dictionary management unit configured to perform the compressing/decompressing of the quicklist in the third compute core. In embodiments, the compression/decompression control unit may include, or may be referred to as, at least one of a compression control unit and a decompression control unit.

According to an exemplary embodiment of the present disclosure, the corresponding computation process may be performed in response to or based on the computation request by the compute core in the PNM device. For example, a process control unit and at least one computation unit with a built-in corresponding algorithm may be included in the compute core with respect to computation process characteristics for different access-intensive computations, to perform the corresponding computation process in response to the computation request. For example, a rehash control unit and a hash unit may be included in the first compute core for rehashing; a traversal control unit, a first decoding unit, and a comparing unit may be included in the second compute core for traversing the compact list; and a compression/decompression control unit, a second decoding unit, an encoding unit, and a dictionary management unit may be included in the third compute core for compressing/decompressing the quicklist.

According to an exemplary embodiment of the present disclosure, the compute proxy at the host side of the database may be responsible for communicating with the compute core on the PNM device for initiating an access-intensive computation, generating and transmitting parameters required for the corresponding access-intensive computation, collecting a computation result, and performing subsequent logical processing. For rehashing, a rehash proxy may be used to detect a condition for rehashing, compute a new bucket size, and initiate a rehash request to the compute core. For traversing a compact list, the traversal proxy may be used to initiate a request for traversing a compact list to the computation core, pass conditional parameters, and perform subsequent processing on a returned result and exception handling. For compressing/decompressing a quicklist, the compression/decompression proxy may be used to initiate a compression/decompression request to the compute core, pass a data address, maintain subsequent logic and exception handling, etc.

According to an exemplary embodiment of the present disclosure, in the compute core in the PNM device, the control unit may be responsible for interacting with the compute proxy at the host side, and performing the computation process by invoking each computation unit, and accessing the memory in the PNM device for reading and writing of data.

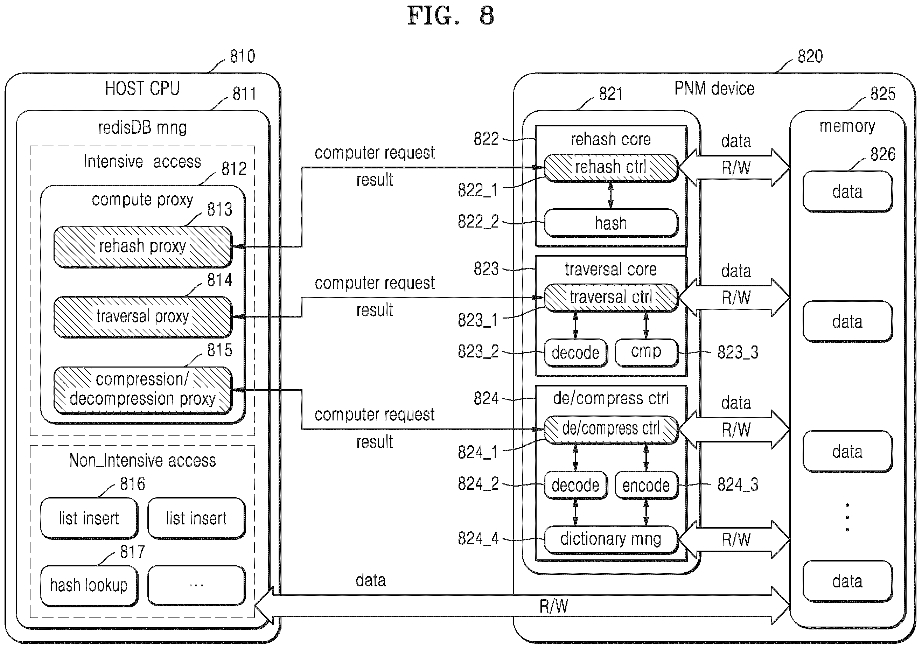

FIG. 8 illustrates a schematic diagram of data interaction of a computation management method for a database of an exemplary embodiment of the present disclosure.

Referring to FIG. 8, according to an exemplary embodiment of the present disclosure, a compute proxy 812 for an access-intensive computation may be set in a Redis database manager 811 executed by a host CPU 810 according to the above computation management method of a database, and one or more processing flows of one or more access-intensive computations may be set. In embodiments, corresponding compute proxies may be set for different access-intensive computations, respectively. According to embodiments, a first computation proxy may be set for rehashing, for example a rehash proxy 813 included in the database manager 811; a second computation proxy may be set for traversing a compact list, for example a traversal proxy 814 included in the database manager 811; and a third computation proxy may be set for compressing/decompressing a quicklist, for example a compression/decompression proxy 815 included in the database manager 811.

Correspondingly, a compute core 821 for an access-intensive computation may be set in PNM device 820 to perform a corresponding computation processes in response to a computation request transmitted through the compute proxy 812. According to embodiments, a first compute core may be set for rehashing, for example a rehash core 822 included in the compute core 821; a second compute core may be set for traversing a compact list, for example a traversal core 823 included in the compute core 821; a third compute core may be set for compressing/decompressing a quicklist, for example a compression/decompression core 824 included in the compute core 821.

According to embodiments, a process control unit and at least one computation unit may also be set in each compute core with respect to computation process characteristics for different access-intensive computations, to perform the corresponding computation process in response to the computation request. For example, a rehash control unit 822_1 (illustrated as "rehash ctrl") and a hash unit 822_2 (illustrated as "hash") may be set for rehashing in the rehash core 822; a traversal control unit 823_1 (illustrated as "traversal ctrl"), a first decoding unit 823_2 (illustrated as "decode"), and a comparing unit 823_3 (illustrated as "cmp") may be set for traversing a compact list in the traversal core 823; and a compression/decompression control unit 824_1 (illustrated as "de/compress ctrl"), a second decoding unit 824_2 (illustrated as "decode"), an encoding unit 824_3 (illustrated as "encode"), and a dictionary management unit 824_4 (illustrated as "dictionary mng") may be set for compressing/decompressing a quicklist in the compression/decompression core.

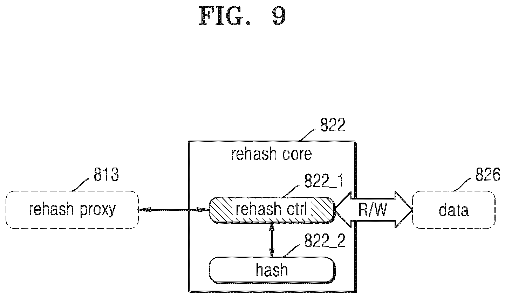

FIG. 9 illustrates an interaction schematic diagram of a rehash core of an exemplary embodiment of the present disclosure.

According to an exemplary embodiment of the present disclosure, with reference to FIGS. 8 and 9, for rehashing, a rehash request, etc. may be transmitted by a rehash proxy 813 to a rehash control unit 822_1, the hash unit 822_2 may be invoked by the rehash control unit 822_1 to perform a rehashing computation process, and to access a memory in the PNM device to read and write (e.g., R/W) data 826, and a computation result transmitted by the rehash control unit 822_1 may be received by the rehash proxy 813.

According to an exemplary embodiment of the present disclosure, specifically, the rehash control unit 822_1 may be used to perform a rehashing process of an entire hash table, and the hash unit may be a built-in hashing algorithm.

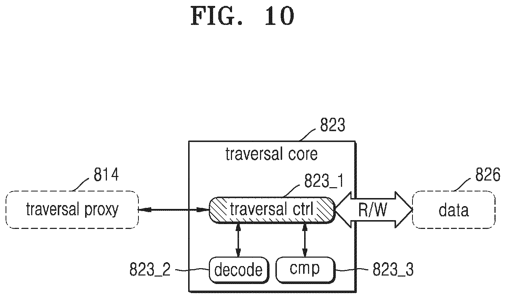

FIG. 10 illustrates an interaction schematic diagram of a traversal core of an exemplary embodiment of the present disclosure.

According to an exemplary embodiment of the present disclosure, with reference to FIGS. 8 and 10, for traversing a compact list, a request for traversing a compact list, etc. may be transmitted by a traversal proxy 814 to a traversal control unit 823_1 , and a first decoding unit 823_2 and a comparing unit 823_3 may be invoked by the traversal control unit 823_1 to perform a computation process of traversing the compact list, and to access a memory 825 in the PNM device to read and write data 826, and a computation result transmitted by the traversal control unit 823_1 may be received by the traversal proxy 814.

According to an exemplary embodiment of the present disclosure, specifically, the traversal control unit 823_1 may be used to perform a traversal process of a listpack under a specified condition, the specified condition may indicate when a user operation relates to performing a traversal of a compact list; the first decoding unit 823_1 may be or may perform a built-in quicklist decoding algorithm; and the comparing unit 823_2 may be or may perform a series of built-in data comparison algorithms.

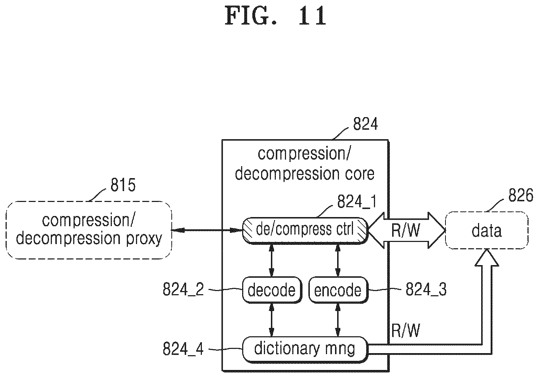

FIG. 11 illustrates an interaction schematic diagram of a compression/decompression core of an exemplary embodiment of the present disclosure.

According to an exemplary embodiment of the present disclosure, with reference to FIG. 8 and FIG. 11, for compressing/decompressing a quicklist, a compression/decompression request, etc. may be transmitted by a compression/decompression proxy 815 to a compression/decompression control unit 824_1, and a second decoding unit 824_2, an encoding unit 824_3, and a dictionary management unit 823_4 may be invoked by the compression/decompression control unit 824_1 to perform a computation process of compressing/decompressing the quicklist, and to access a memory 825 in the PNM device 820 to read and write data 826, and a computation result transmitted by the compression/decompression control unit 824_1 may be received by the compression/decompression proxy 815. Wherein, the dictionary management unit may separately access the memory in the PNM device to read and write data.

According to an exemplary embodiment of the present disclosure, specifically, the compression/decompression control unit 824_1 may be used to perform a compression and/or decompression process on data of a specified length; the second decoding unit 824_2 may be a built-in decoding algorithm for a file type such as a ZLF file type; the encoding unit 824_3 may be or may perform a built-in ZLF encoding algorithm; and the dictionary management unit 824_4 may be used to maintain a ZLF dictionary. It may be understood that the compression and/or decompression process described above is not limited to the processing of ZLF files.

Furthermore, referring again to FIG. 8, the non-access-intensive computation in the Redis database manager 811 executed by a host CPU 810 may directly interact with the memory 825 in the PNM device 820 to read and write data 826 without setting a compute proxy in the host of the database Redis and/or a corresponding compute core in the PNM device 820. The aforementioned non-access-intensive computation may include, but not limited to, list inserting, hash lookup, etc.

It may be understood that the access-intensive computation and the non-access-intensive computation are not limited to the above listed types of computation.

According to an exemplary embodiment of the present disclosure, the corresponding computation process may be performed by the process control unit and the at least one computation unit in the compute core, in response to the computation request. According to an embodiment, such a computation process may include: receiving, by the rehash control unit 822_1 in the PNM device 820, a first computation request corresponding to the rehashing, wherein the first computation request carries hash table information, new bucket size information; starting, by the rehash control unit, to perform the rehashing based on the first computation request; sequentially reading, by the rehash control unit 822_1, an entry address of a bucket from the memory 825; ending the performing of rehashing in a case where an entry address of a current bucket is empty; reading, by the rehash control unit 822_1, a first entry in the current bucket in a case where the entry address of the current bucket is not empty, and switching to read an entry address of a next bucket from the memory 825 in a case where the current bucket is empty; recalculating, by the hash unit 822_2, a hash key value according to the new bucket size information; reading, by the rehash control unit 822_1, an entry address of a new bucket; rehooking, by the rehash control unit 822_1, the entry into the new bucket, using the next bucket of the current bucket as a new current bucket, and restarting from the reading of the first entry in the current bucket; transmitting, by the rehash control unit 822_1, the notification of the computation result to the compute proxy of the database in a case of ending the performing of rehashing. In embodiments, ending the performing of an operation may be referred to as terminating the operation.

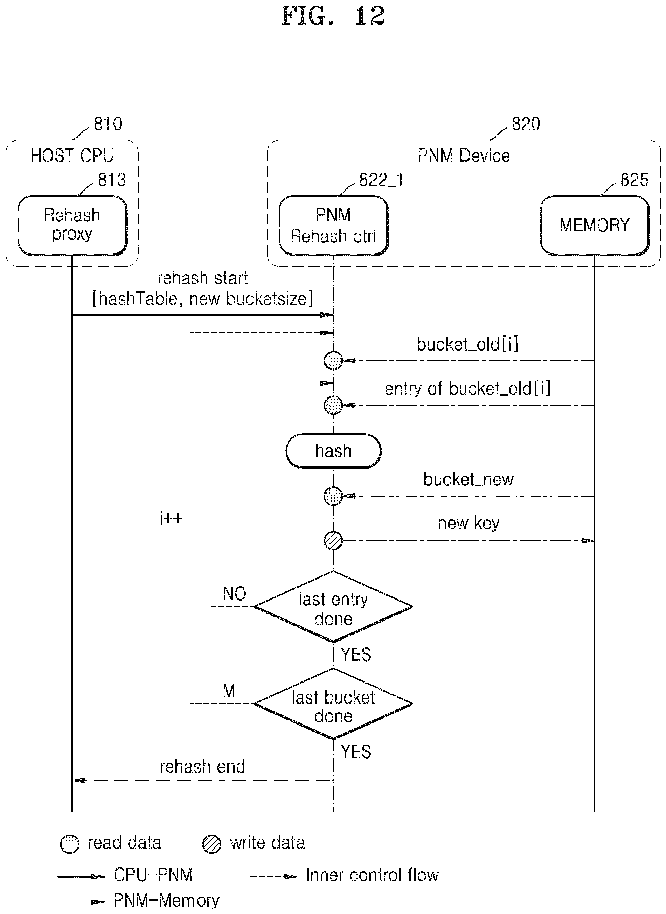

FIG. 12 illustrates a timing diagram of a rehashing computation process of an exemplary embodiment of the present disclosure.

Referring to FIG. 12, according to an exemplary embodiment of the present disclosure, the above PNM device 820 may be a compute express link (CXL)-based PNM device. According to embodiments, CXL may be a high-speed serial computer extension bus standard that makes it possible to add/remove a CXL-based PNM device on-line at a CXL server using a hot-plugging function according to the business volume to perform dynamic capacity adjustment without causing a disruption of business. This may be denoted by CXL-PNM.

According to an exemplary embodiment of the present disclosure, for a computation process of rehashing, at the host side of the database, a rehash proxy 813 may be controlled by a host CPU 810 to transmit a first computation request (a rehash request) corresponding to rehashing to a rehash control unit 822_1 in a PNM device 820, wherein the first computation request may carry hash table information, new bucket size information, etc., so that the rehash control unit 822_1 may start to perform the rehashing through the first computation request; in the process of performing the rehashing by the rehash control unit 822_1, an entry addresses of a bucket may be sequentially read from a memory 825 by the rehash control unit 822_1 based on the hash table information and the new bucket size information; for a current bucket, a previously-read bucket may be referred to as an old bucket (denoted in FIG. 12 as "bucket_old[i]"), and a subsequent buck may be referred to as a new bucket (denoted in FIG. 12 as "bucket_new" in the illustration), an entry (entry of bucket_old[i]) in the current bucket may be continued to be read when reading the current bucket; in a case where the entry address of the current bucket is empty (or all buckets in the hash table have been read, i.e., last bucket done), the performing of the rehashing ends; in a case where the entry address of the current bucket is not empty (or not all buckets in the hash table have been read), the rehash control unit 822_1 reads a first entry in the current bucket, and in a case where the current bucket is empty (all buckets in the hash table have been read, e.g., last bucket done), it switches from the memory 825 to read an entry address of a next bucket; the rehash control unit 822_1invokes the hash unit 822_2 to recalculate a hash key value according to the new bucket size information and write the hash key value into the memory; the rehash control unit 822_1 reads an entry address of a new bucket; the rehash control unit 822_1 rehooks the entry to the new bucket (bucket _new), and takes a next bucket of the current bucket as the new current bucket, and restarts from the reading of the first entry in the current bucket; in a case of ending the performing of rehashing, the rehash control unit 822_1 may transmit a notification of the computation result to the rehash proxy of the database.

According to an exemplary embodiment of the present disclosure, the corresponding computation process may be performed by the process control unit and the at least one computation unit in the compute core, in response to the computation request, which may include: receiving, by the traversal control unit 823_1 in the PNM device 820, a second computation request corresponding to the traversing of the compact list; starting, by the traversal control unit 823_1, to perform the traversing of the compact list based on the second computation request; sequentially reading, by the traversal control unit 823_1, a current element from the memory 825; ending the performing of traversing the compact list in a case where an address of the current element is empty; performing, by the first decoding unit 823_2, a decoding computation on the current element in a case where the address of the current element is not empty; comparing, by the comparing unit, whether the current element is a target element, ending the performing of traversing the compact list in a case where the current element is the target element, and restarting from the sequentially reading of the current element from the memory 825 in a case where the current element is not the target element; transmitting, by the traversal control unit 823_1, the notification of the computation result to the compute proxy of the database in a case of ending the performing of traversing the compact list.

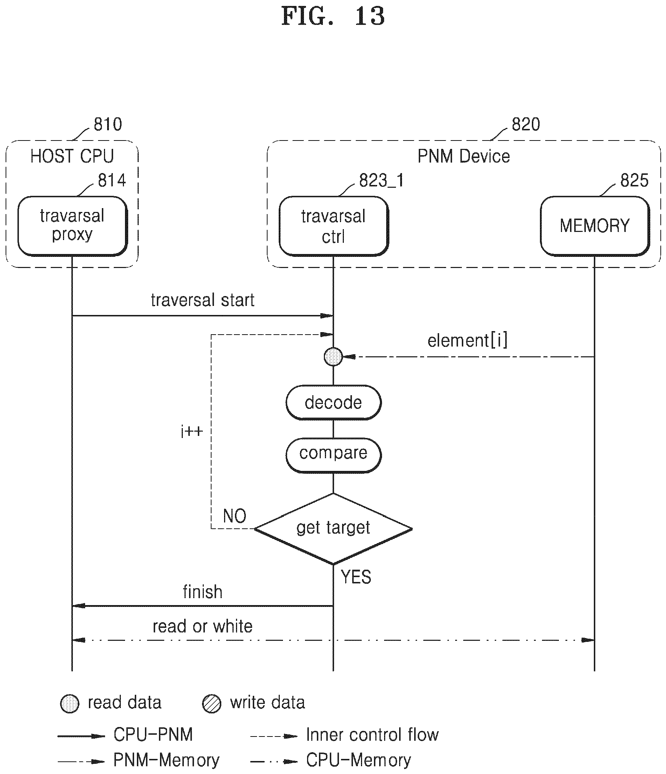

FIG. 13 illustrates a timing diagram of a computation process of traversing a compact list of an exemplary embodiment of the present disclosure.

Referring to FIG. 13, according to an exemplary embodiment of the present disclosure, for a computation process of traversing a compact list, at the host side of the database, a traversal proxy 814 may be controlled by a host CPU 810 to transmit a second computation request corresponding to traversing the compact list (a request for traversing the compact list) to the traversal control unit 823_1 in the PNM device 820, so that the traversal control unit 823_1 may start to perform the traversing of the compact list through the second computation request; in the process of performing the traversing the compact list by the traversal control unit 823_1, a current element (element[i]) may be read from a memory 825 by the traversal control unit 823_1 sequentially; in a case where an address of the current element is empty, the performing of the traversing the compact list ends; in a case where the address of the current element is not empty, the traversal control unit 823_1 invokes a first decoding unit to perform a decoding computation on the current element; the traversal control unit 823_1 invokes a comparing unit to compare whether the current element is a target element (illustrated as "get target?"), the performing of traversing the compact list ends in a case where the current element is the target element, and the sequentially reading of the current element from the memory 825 is restarted in a case where the current element is not the target element; the traversal control unit 823_1 may transmit a notification of the computation result to the traversal proxy 814 of the database in a case of ending the performing of traversing the compact list.

According to an exemplary embodiment of the present disclosure, the traversal proxy may directly read or write to the memory in the PNM device to exchange data.

According to an exemplary embodiment of the present disclosure, the corresponding computation process may be performed by the process control unit and the at least one computation unit in the compute core, in response to the computation request, which may include: receiving, by the compression/decompression control unit in the PNM device, a third computation request corresponding to the compressing of the quicklist, wherein the third computation request carries an address of raw data, a length of the raw data, and an address of compressed data; starting, by the compression/decompression control unit, to perform the compressing of the quicklist based on the third computation request; reading, by the compression/decompression control unit, raw data from the memory based on the address of the raw data; ending the performing of compressing the quicklist in a case where a compression target for the raw data has been accomplished; controlling, by the compression/decompression control unit, the encoding unit to generate compressed data or a new dictionary code based on the dictionary management unit with the length of the raw data as the compression target; writing, by the compression/decompression control unit, the generated compressed data or the new dictionary code to the address of the compressed data, restarting from the reading of the raw data from the memory based on the address of the raw data; transmitting, by the compression/decompression control unit, the notification of the computation result to the compute proxy of the database in a case of ending the performing of compressing the quicklist.

According to an exemplary embodiment of the present disclosure, the corresponding computation process may be performed by the process control unit and the at least one computation unit in the compute core, in response to the computation request, which may include: receiving, by the compression/decompression control unit 824_1 in the PNM device 820, a fourth computation request corresponding to the decompressing of the quicklist, wherein the fourth computation request carries an address of compressed data, a length of the compressed data, and an address of decompressed data; starting, by the compression/decompression control unit 824_1, to perform the decompressing of the quicklist based on the fourth computation request; reading, by the compression/decompression control unit 824_1, compressed data from the memory based on the address of the compressed data; ending the performing of decompressing the quicklist in a case where a decompression target for the compressed data has been accomplished; controlling, by the compression/decompression control unit 824_1, the second decoding unit to generate decompressed data based on the dictionary management unit with the length of the compressed data as the decompression target; writing, by the compression/decompression control unit 824_1, the generated decompressed data to the address of the decompressed data, restarting from the reading of the compressed data from the memory based on the address of the compressed data; transmitting, by the compression/decompression control unit 824_1, the notification of the computation result to the computation proxy of the database in a case of ending the performing of decompressing the quicklist.

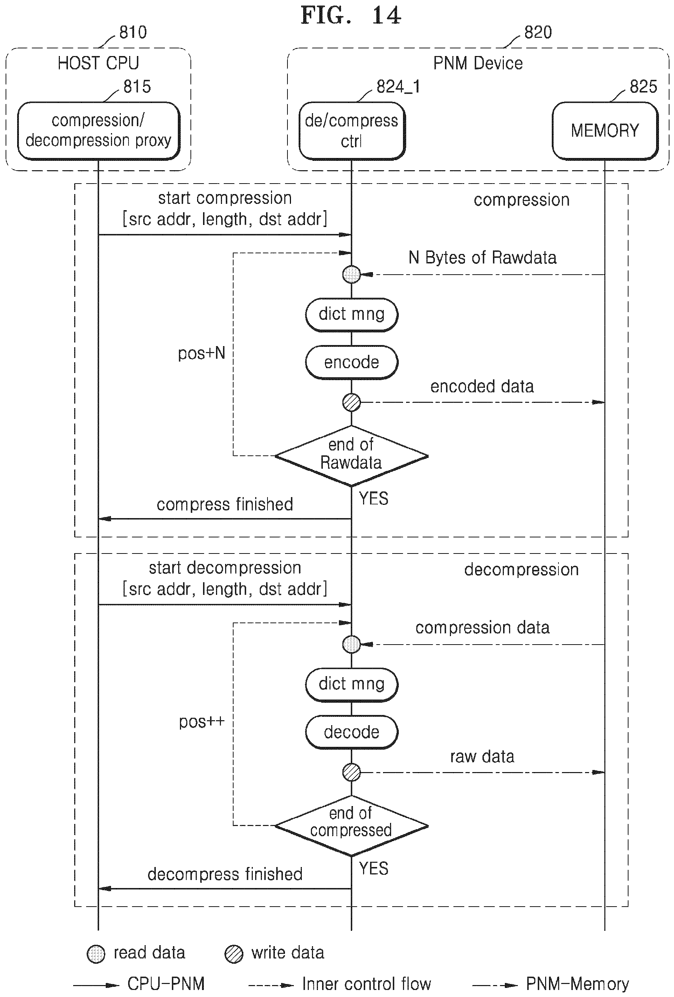

FIG. 14 illustrates a timing diagram of a computation process of compressing/decompressing a quicklist of an exemplary embodiment of the present disclosure.

Referring to FIG. 14, according to an exemplary embodiment of the present disclosure, for a computation process of compressing a quicklist, at the host side of the database, a compression/decompression proxy 815 may be controlled by a host CPU 810 to transmit a third computation request corresponding to the compressing of the quicklist (a compression request) to a compression/decompression control unit 824_1 in the PNM device 820, so that the compression/decompression control unit may start to perform the compressing of the quicklist through the third computation request, wherein the third computation request may carry an address of raw data, a length of the raw data, and an address of compressed data; in the process of performing the compressing of the quicklist by the compression/decompression control unit 824_1, N bytes of the raw data may be read from a memory by the compression/decompression control unit 824_1 based on the address of the raw data, and the byte length may be determined by information about the length of the raw data carried in the third computation request; in a case where a compression target for the raw data has been accomplished, the performing of compressing the quicklist ends; in a case where the compression target of the raw data has not been accomplished, the compression/decompression control unit 824_1 may revoke a dictionary management unit to perform a dictionary comparison for the raw data, revoke an encoding unit to perform a compression encoding of the raw data with the length of the raw data as the compression target to generate the compressed data, or generate a new dictionary code; the compression/decompression control unit 824_1 may write the generated compressed data into the memory based on the address of the compressed data, or the dictionary management unit writes the new dictionary code into the memory; restarts from the reading of the raw data from the memory based on the address of the raw data; and in a case of ending the performing of compressing the quicklist, the compression/decompression control unit 824_1 transmits a notification of the computation result to the compress proxy of the database.

Referring to FIG. 14, according to an exemplary embodiment of the present disclosure, for a computation process of decompressing a quicklist, at the host side of the database, a compression/decompression proxy 815 may be controlled by a host CPU 810 to transmit a fourth computation request corresponding to the decompressing of the quicklist (a decompression request) to a compression/decompression control unit 824_1 in the PNM device 820, so that the compression/decompression control unit 824_1 may start to perform the decompressing of the quicklist through the fourth computation request, wherein the fourth computation request may carry an address of compressed data, a length of the compressed data, and an address of decompressed data; in the process of performing the decompressing of the quicklist by the compression/decompression control unit 824_1, compressed data may be read by the compression/decompression control unit 824_1 from a memory 825 based on the address of the compressed data and the length of the compressed data; in a case where a decompression target for the compressed data has been accomplished, the performing of decompressing the quicklist ends; in a case where the decompression target for the compressed data has not been accomplished, the compression/decompression control unit 824_1 may invoke a dictionary management unit to look up a dictionary code, invoke a second decoding unit to generate decompressed raw data with the length of the compressed data as the decompression target; the compression/decompression control unit 824_1 writes the generated decompressed raw data into the memory based on the address of the decompressed data; restarts from the reading of the compressed data from the memory based on the address of the compressed data; in a case of ending the performing of decompressing the quicklist, the compression/decompression control unit 824_1 transmits a notification of the computation result to the decompress proxy of the database.

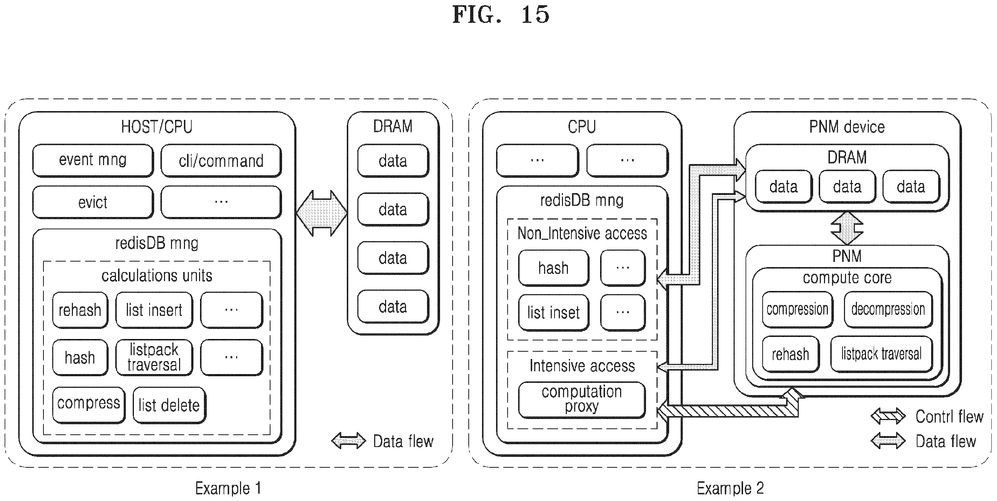

FIG. 15 illustrates a comparison diagram of a related technical solution with an exemplary embodiment of the present disclosure.

Referring to FIG. 15, in Example 1, which may be a comparative example, in a CPU at the host side, operations such as event management, click/command line, exit, etc., may be performed, and in a case of a database Redis, all types of computation processes, such as rehashing, list inserting, hashing, traversing a compact list, compression, list deleting, etc., are performed by a computation unit in a management system of the database Redis; thus, the CPU at the host side directly accesses a memory (e.g., Dynamic Random Access Memory (DRAM)) for data streaming. As shown in Example 2, embodiments of the present disclosure categorize the types of computations in the CPU at the host side into an access-intensive computation and a non-access-intensive computation, and offload the access-intensive computation to a PNM device and perform data transmission between a compute core and a memory in the near memory computing device by setting a compute proxy at the host side of the database and setting the compute core in the PNM device, transmitting a computation request by the compute proxy and performing a computation process (e.g., a process such as compressing, decompressing, rehashing, and traversing a compact list, etc.) by the compute core, in order to significantly reduce the data transmission between the CPU and the memory in the database, achieve the effect of releasing the computation resources of the CPU in the database, save memory, and improve the performance and execution efficiency of the database; for the non-access-intensive computation, such as hashing, list inserting, etc., there is no need to frequently access the memory, offloading may also not be required, and all data exchanges may still be performed between the host of the database and the memory.

According to an exemplary embodiment of the present disclosure, the following table shows a comparison of numbers of CPU accesses between Example 1 and Example 2.

| computation type | number of times CPU accesses memory | |
|---|---|---|
| | Example 1 | Example 2 |
| rehashing | N (a number of entries) X M (a number of buckets) | 0 |
| traversing a compact list | N (a number of elements) | 1 |
| compressing/decompressing a quicklist | N (a node data size) | 0 |

As may be seen from the above table, for the computation process of rehashing, the number of times the CPU accesses the memory in Example 1 is N (the number of entries) x M (the number of buckets), while the number of times in the Example 2 is 0; for the computation process of traversing the compact list, the number of times the CPU accesses the memory in Example 1 is N (the number of elements), while Example 2 only accesses the memory once by the CPU when performing an operation such as insertion on the compact list after traversing the compact list; for the computation process of compressing/decompressing the quicklist, the number of times the CPU accesses the memory is N (the node data size) in Example 1, while the number of times in Example 2 is 0.

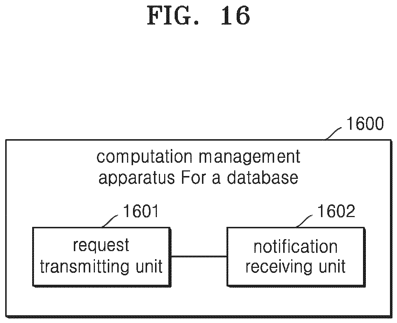

FIG. 16 illustrates a block diagram of a computation management apparatus for a database of an exemplary embodiment of the present disclosure.

Referring to FIG. 16, an exemplary embodiment of the present disclosure also provides a computation management apparatus 1600 for a database. The computation management apparatus 1600 for a database may include a request transmitting unit 1601 and a notification receiving unit 1602.

The request transmitting unit 1601 may transmit, by a compute proxy, a corresponding computation request to a PNM device in a case where a computation to be performed is a predetermined access-intensive computation, wherein the access-intensive computation is a computation in which a frequency of data transmission between a processor and a memory is greater than a first predetermined threshold, and the compute proxy is set for the access-intensive computation.

The notification receiving unit 1602 may receive, by the compute proxy, a notification of a result of a computation performed by the PNM device in response to the computation request.

According to an exemplary embodiment of the present disclosure, the access-intensive computation may include at least one of: a computation in which a frequency of accessing the memory is greater than a second predetermined threshold; a computation in which a degree of simplicity of the computation is less than a third predetermined threshold; a computation in which a degree of simplicity of logical control of the computation is less than a fourth predetermined threshold.

According to an exemplary embodiment of the present disclosure, the access-intensive computation further includes at least one of: rehashing; traversing a compact list; compressing/decompressing a quicklist.

According to an exemplary embodiment of the present disclosure, the compute proxy includes at least one of: a first compute proxy set for the rehashing; a second compute proxy set for the traversing of the compact list; a third compute proxy set for the compressing/decompressing of the quicklist.

According to an exemplary embodiment of the present disclosure, the above apparatus 1600 may further include a computation performing unit applied to the PNM device, which may perform, by a compute core, a corresponding computation process in response to the computation request; wherein the compute core is set for the access-intensive computation, the compute core includes at least one of: a first compute core set for the rehashing; a second compute core set for the traversing of the compact list; a third compute core set for the compressing/decompressing of the quicklist.

According to an exemplary embodiment of the present disclosure, the computation performing unit may perform, by a process control unit and at least one computation unit in the compute core, the corresponding computation process in response to the computation request; wherein the process control unit and the at least one computation unit in the compute core are set for the access-intensive computation, the process control unit and the at least one computation unit in the compute core include at least one of: a rehash control unit and a hash unit set for the rehashing in the first compute core; a traversal control unit, a first decoding unit and a comparing unit set for the traversing of the compact list in the second compute core; a compression/decompression control unit, a second decoding unit, an encoding unit and a dictionary management unit set for the compressing/decompressing of the quicklist in the third compute core.

According to an exemplary embodiment of the present disclosure, the computation performing unit may receive, by the rehash control unit, a first computation request corresponding to the rehashing, wherein the first computation request carries hash table information, new bucket size information; start, by the rehash control unit, to perform the rehashing based on the first computation request; sequentially read, by the rehash control unit, an entry address of a bucket from the memory; end the performing of rehashing in a case where an entry address of a current bucket is empty; read, by the rehash control unit, a first entry in the current bucket in a case where the entry address of the current bucket is not empty, and switch to read an entry address of a next bucket from the memory in a case where the current bucket is empty; recalculate, by the hash unit, a hash key value according to the new bucket size information; read, by the rehash control unit, an entry address of a new bucket; rehook, by the rehash control unit, the entry into the new bucket, use the next bucket of the current bucket as a new current bucket, and restart from the reading of the first entry in the current bucket; transmit, by the rehash control unit, the notification of the computation result to the compute proxy of the database in a case of ending the performing of rehashing.

According to an exemplary embodiment of the present disclosure, the computation performing unit may receive, by the traversal control unit, a second computation request corresponding to the traversing of the compact list; start, by the traversal control unit, to perform the traversing of the compact list based on the second computation request; sequentially read, by the traversal control unit, a current element from the memory; end the performing of traversing the compact list in a case where an address of the current element is empty; perform, by the first decoding unit, a decoding computation on the current element in a case where the address of the current element is not empty; compare, by the comparing unit, whether the current element is a target element, end the performing of traversing the compact list in a case where the current element is the target element, and restart from the sequentially reading of the current element from the memory in a case where the current element is not the target element; transmit, by the traversal control unit, the notification of the computation result to the compute proxy of the database in a case of ending the performing of traversing of the compact list.

According to an exemplary embodiment of the present disclosure, the computation performing unit may receive, by the compression/decompression control unit, a third computation request corresponding to the compressing of the quicklist, wherein the third computation request carries an address of raw data, a length of the raw data, and an address of compressed data; start, by the compression/decompression control unit, to perform the compressing of the quicklist based on the third computation request; read, by the compression/decompression control unit, raw data from the memory based on the address of the raw data; end the performing of compressing the quicklist in a case where a compression target for the raw data has been accomplished; control, by the compression/decompression control unit, the encoding unit to generate compressed data or a new dictionary code based on the dictionary management unit with the length of the raw data as the compression target; write, by the compression/decompression control unit, the generated compressed data or the new dictionary code to the address of the compressed data, restart from the reading of the raw data from the memory based on the address of the raw data; transmit, by the compression/decompression control unit, the notification of the computation result to the compute proxy of the database in a case of ending the performing of compressing the quicklist.

According to an exemplary embodiment of the present disclosure, the computation performing unit may receive, by the compression/decompression control unit, a fourth computation request corresponding to the decompressing of the quicklist, wherein the fourth computation request carries an address of compressed data, a length of the compressed data, and an address of decompressed data; start, by the compression/decompression control unit, to perform the decompressing of the quicklist based on the fourth computation request; read, by the compression/decompression control unit, compressed data from the memory based on the address of the compressed data; end the performing of decompressing the quicklist in a case where a decompression target for the compressed data has been accomplished; control, by the compression/decompression control unit, the second decoding unit to generate decompressed data based on the dictionary management unit with the length of the compressed data as the decompression target; write, by the compression/decompression control unit, the generated decompressed data to the address of the decompressed data, restart from the reading of the compressed data from the memory based on the address of the compressed data; transmit, the compression/decompression control unit, the notification of the computation result to the computation proxy of the database in a case of ending the performing of decompressing the quicklist.

It may be understood that the respective units in the above computation management apparatus 1600 for a database may be used to implement the above computation management method for a database, and the specific implementation process in the exemplary embodiment is substantially the same as that in the above exemplary embodiment of the computation management method for a database, and will not be described repeatedly herein. The computation management apparatus 1600 for a database may be configured as software, hardware, firmware, or any combination of the foregoing items for performing specific functions, respectively. For example, these units described as being included in the apparatus may correspond to pure software code, to a specialized integrated circuit, or to a module that combines software and hardware. In addition, one or more of the functions implemented by these units in the apparatus may also be uniformly performed by components in a physical entity device (e.g., a processor, client, or server, etc.).

According to an exemplary embodiment of the present disclosure, there may also be provided a computer readable storage medium storing instructions, wherein the instructions, when run by at least one computing apparatus, cause the at least one computing apparatus to perform the above computation management method for a database. Examples of computer readable storage media herein include: Read Only Memory (ROM), Random Access Programmable Read Only Memory (RAPROM), Electrically Erasable Programmable Read Only Memory (EEPROM), Random Access Memory (RAM), Dynamic Random Access Memory (DRAM), Static Random Access Memory (SRAM), flash memory, non-volatile memory, compact disc (CD) read only memory (CD-ROM), CD-recordable (CD-R), CD+R, CD-rewritable (CD-RW), CD+RW, digital versatile disc (DVD) ROM DVD-ROM, DVD-R, DVD+R, DVD-RW, DVD+RW, DVD-RAM, Blu-ray Disc (BD), BD-ROM, BD-R, BD-R Low to High (LTH), BD-RE, optical disk storage, Hard Disk Drive (HDD), Solid State Drive (SSD), card storage (such as multimedia cards, secure digital (SD) cards or extremely fast digital (XD) cards), magnetic tapes, floppy disks, magneto-optical data storage devices, optical data storage devices, hard disks, solid state disks, and any other devices that are configured to store computer programs and any associated data, data files and data structures in a non-transitory manner and provide the computer programs and any associated data, data files and data structures to a processor or computer so that the processor or computer may execute the computer programs. The instructions or computer programs in the computer readable storage medium described above may be executed in an environment deployed in a computer device, such as client, host, proxy device, server, etc. In addition, in one example, the computer programs and any associated data, data files, and data structures are distributed on a networked computer system, so that the computer programs and any associated data, data files, and data structures are stored, accessed and executed through one or more processors or computers in a distributed manner. It should be noted that the instructions may also be used to perform additional steps in addition to the steps described above or to perform more specific processing when performing the steps described above, and the content of these additional steps and further processing has already been referred to in the process of describing the relevant methods, and will therefore not be repeated herein in order to avoid repetition.

It should be noted that the computation management apparatus for a database according to the exemplary embodiment of the present disclosure may rely entirely on operation of a computer program or instructions to implement the corresponding functions, i.e., the individual units correspond to the steps in the functional architecture of the computer program, such that the entire system is invoked to implement the corresponding functions by means of specialized software packages (e.g., libraries).

In some embodiments, when the above computation management apparatus for a database is implemented as software, firmware, middleware, or microcode, program code or code segments for performing the corresponding operations may be stored in a computer readable medium, such as a storage medium, such that at least one processor or at least one computing apparatus may perform corresponding operations by reading and running the corresponding program code or code segments.

According to an exemplary embodiment of the present disclosure, a storage apparatus may be integrated with a computing apparatus, e.g., RAM or a flash memory is deployed in an integrated circuit microprocessor, etc. The computing apparatus is capable of reading instructions stored in the storage apparatus.

Another embodiment of the present disclosure relates to a system including at least one computing apparatus and at least one storage apparatus storing instructions, wherein the instructions, when run by the at least one computing apparatus, cause the at least one computing apparatus to perform the method embodiments described above.

The computation management method for a database, the apparatus, the storage medium, and the system according to the present disclosure may transfer the time-consuming access-intensive computation from the database to a place near memory, for example, to a computation memory such as a PNM device, which may significantly reduce the data transmission between the CPU and the memory in the database and release the CPU computation resources of the database, so as to fundamentally improve the efficiency of the database.

## Claims

1. A computation management method for managing a database, the computation management method comprising:
transmitting (S701), by a compute proxy (812), a computation request to a processing near memory, PNM, device (820) based on determining that a computation to be performed comprises a predetermined access-intensive computation in which a data transmission frequency between a processor (810) and a memory (825) is greater than a first predetermined threshold, and the compute proxy (812) is selected to perform the access-intensive computation; and
receiving (S702), by the compute proxy (812), a notification about a computation result generated by the PNM device (820) based on the computation request.

2. The computation management method as claimed in claim 1, wherein at least one of:
a memory access frequency of the access-intensive computation is greater than a second predetermined threshold,
a computational simplicity of the access-intensive computation is less than a third predetermined threshold, and
a logical control simplicity of the access-intensive computation is less than a fourth predetermined threshold.

3. The computation management method as claimed in claim 1 or 2, wherein the access-intensive computation comprises at least one of:
a rehashing operation;
a traversing operation corresponding to a compact list; and
a compression operation or a decompression operation corresponding to a quicklist.

4. The computation management method as claimed in claim 3, wherein the compute proxy (812) comprises at least one of:
a first compute proxy (813) configured to perform the rehashing operation;
a second compute proxy (814) configured to perform the traversing operation, and
a third compute proxy (815) configured to perform the compression operation or the decompression operation.

5. The computation management method as claimed in claim 3 or 4, wherein the computation management method further comprises:
performing, by a compute core (821) included in the PNM device (820), a computation process based on the computation request,
wherein the compute core (821) is configured to perform the access-intensive computation, and
wherein the compute core (821) comprises at least one of:
a first compute core (822) configured to perform the rehashing operation;
a second compute core (823) configured to perform the traversing operation;
a third compute core (824) configured to perform the compression operation or the decompression operation.

6. The computation management method as claimed in claim 5, wherein the performing, by the compute core (821), of the computation process comprises:
performing, by a process control unit and at least one computation unit included in the compute core (821), the computation process based on the computation request,
wherein at least one of the process control unit and the at least one computation unit are configured to perform the access-intensive computation, and
wherein the at least one of the process control unit and the at least one computation unit comprise at least one of:
a rehash control unit (822_1) and a hash unit (822_2) configured to perform the rehashing operation in the first compute core (822);
a traversal control unit (823_1), a first decoding unit (823_2) and a comparing unit (823_3) configured to perform the traversing operation in the second compute core (823);
a compression control unit (824_1), a decompression control unit (824_1), a second decoding unit (824_2), an encoding unit (824_3) and a dictionary management unit (824_4) configured to perform the compression operation or the decompression operation in the third compute core (824).

7. The computation management method as claimed in claim 6, wherein the performing, by the process control unit and the at least one computation unit, the computation process comprises:
receiving, by the rehash control unit (822_1), a first computation request corresponding to the rehashing operation, wherein the first computation request comprises hash table information and new bucket size information;
starting, by the rehash control unit (822_1), the rehashing operation based on the first computation request;
sequentially reading, by the rehash control unit (822_1), an entry address of a bucket from the memory (825);
terminating the rehashing operation based on an entry address of a current bucket being empty;
reading, by the rehash control unit (822_1), a first entry in the current bucket based on the entry address of the current bucket being not empty, and switching to read an entry address of a next bucket from the memory (825) based on the current bucket being empty;
recalculating, by the hash unit (822_2), a hash key value according to the new bucket size information;
reading, by the rehash control unit (822_1), an entry address of a new bucket;
rehooking, by the rehash control unit (822_1), the entry into the new bucket, using the next bucket, and restarting the rehashing operation based on the next bucket; and
transmitting, by the rehash control unit (822_1), the notification about the computation result to the compute proxy (812) based on the rehashing operation being terminated.

8. The computation management method as claimed in claim 6 or 7, wherein the performing, by the process control unit and the at least one computation unit, the computation process comprises:
receiving, by the traversal control unit (823_1), a second computation request corresponding to the traversing operation;
starting, by the traversal control unit (823_1), the traversing operation based on the second computation request;
sequentially reading, by the traversal control unit (823_1), a current element from the memory (825);
terminating the traversing operation based on an address of the current element being empty;
performing, by the first decoding unit (823_2), a decoding computation on the current element based on the address of the current element being not empty;
comparing, by the comparing unit (823_3), the current element with a target element;
terminating the traversing operation based on determining that the current element is the target element, and restarting the traversing operation based on determining that the current element is not the target element; and
transmitting, by the traversal control unit (823_1), the notification about the computation result to the compute proxy (812) based on the traversing operation being terminated.

9. The computation management method as claimed in any one of claims 6 to 8, wherein the performing, by the process control unit and the at least one computation unit, the computation process comprises:
receiving, by the compression control unit (824_1) in the PNM device (820), a third computation request corresponding to the compression operation, wherein the third computation request comprises an address of raw data, a length of the raw data, and an address of compressed data;
starting, by the compression control unit (824_1), the compression operation based on the third computation request;
reading, by the compression control unit (824_1), the raw data from the memory (825) based on the address of the raw data;
terminating the compression operation based on a compression target for the raw data being accomplished;
controlling, by the compression control unit (824_1), the encoding unit (824_3) to generate at least one of compressed data and a new dictionary code based on the dictionary management unit (824_4) using the length of the raw data as the compression target;
writing, by the compression control unit (824_1), the at least one of the generated compressed data and the new dictionary code to the address of the compressed data, and restarting the compression operation based on the address of the raw data;
transmitting, by the compression control unit (824_1), the notification about the computation result to the compute proxy (812) based on the compression operation being terminated.

10. The computation management method as claimed in any one of claims 6 to 9, wherein the performing, by the process control unit and the at least one computation unit, the computation process based on the computation request comprises:
receiving, by the decompression control unit (824_1), a fourth computation request corresponding to the decompression operation, wherein the fourth computation request comprises an address of compressed data, a length of the compressed data, and an address of decompressed data;
starting, by the decompression control unit (824_1), the decompression operation based on the fourth computation request;
reading, by the decompression control unit (824_1), compressed data from the memory (825) based on the address of the compressed data;
terminating the decompression operation based on a decompression target for the compressed data being accomplished;
controlling, by the decompression control unit (824_1), the second decoding unit (824_2) to generate decompressed data based on the dictionary management unit (824_4) using the length of the compressed data as the decompression target;
writing, by the decompression control unit (824_1), the decompressed data to the address of the decompressed data, and restarting the decompression operation based on the address of the compressed data;
transmitting, by the decompression control unit (824_1), the notification of the computation result to the compute proxy (812) based on the decompression operation being terminated.

11. A computation management apparatus (1600) for a database, the computation management apparatus (1600) comprising:
a request transmitting unit (1601) configured to transmit, by a compute proxy (812), a computation request to a processing near memory, PNM, device (820) based on determining that a computation to be performed comprises a predetermined access-intensive computation in which a data transmission frequency between a processor (810) and a memory (825) is greater than a first predetermined threshold, and the compute proxy (812) is selected to perform the access-intensive computation; and
a notification receiving unit (1602) configured to receive, by the compute proxy (812), a notification about a computation result generated by the PNM device (820) in based on the computation request.

12. The computation management apparatus (1600) as claimed in claim 11, wherein at least one of:
a memory access frequency of the access-intensive computation is greater than a second predetermined threshold;
a computational simplicity of the access-intensive computation is less than a third predetermined threshold;
a logical control simplicity of the access-intensive computation is less than a fourth predetermined threshold.

13. The computation management apparatus (1600) as claimed in claim 11 or 12, wherein the access-intensive computation comprises at least one of:
a rehashing operation;
a traversing operation corresponding to a compact list; and
a compression operation or a decompression operation corresponding to a quicklist.

14. The computation management apparatus (1600) as claimed in claim 13, wherein the compute proxy (812) comprises at least one of:
a first compute proxy (813) configured to perform the rehashing operation;
a second compute proxy (814) configured to perform the traversing operation; and
a third compute proxy (815) configured to perform the compression operation or the decompression operation.

15. The computation management apparatus (1600) as claimed in claim 13 or 14, wherein the PNM device (820) is configured to:
perform, by a compute core (821) included in the PNM device (820), a computation process based on the computation request;
wherein the compute core (821) is configured to perform the access-intensive computation, and
wherein the compute core (821) comprises at least one of:
a first compute core (822) configured to perform the rehashing operation;
a second compute core (823) configured to perform the traversing operation;
a third compute core (824) configured to perform the compression operation or the decompression operation.
